# EUROPEAN PATENT APPLICATION

(11) **EP 3 444 312 A1**
(43) Date of publication of application: **20.02.2019**
(21) Application number: 17782392.9
(22) Date of filing: 11.04.2017
(51) Int. Cl.: C09J 201/00, C09J 5/08, C09J 11/04

(54) **GRANULAR ADHESIVE**

(30) Priority: 12.04.2016 JP 2016079596
(71) Applicant: Sumitomo Chemical Company Limited, Tokyo 104-8260 (JP); Josho Gakuen Educational Foundation, Osaka 535-8585 (JP)
(72) Inventor: TAKEKO, Ryu, Tokyo 104-8260 (JP); FUJII, Syuji, Osaka-shi Osaka 535-8585 (JP); NAKAMURA, Yoshinobu, Osaka-shi Osaka 535-8585 (JP)
(74) Representative: J A Kemp
(86) International application number: PCT/JP2017/014840
(87) International publication number: WO 2017/179579

(57) **Abstract**

Disclosed is a granular adhesive comprising adhesive particles, wherein the adhesive particles include a core containing an adhesive composition, a shell covering the core, and an enclosed gas, and the shell includes solid particles.

## Description

### Technical Field

The present invention relates to a granular adhesive.

### Background Art

Generally, adhesives are classified into dry-solidification type adhesives, chemical-reaction type adhesives, hot-melt type adhesives, and pressure-sensitive type adhesives according to the solidification method. The dry-solidification type adhesives are adhesives that are cured by evaporation of water and a solvent in the adhesive. The chemical-reaction type adhesives are adhesives that are cured by the chemical reaction of liquid compounds. Examples of the adhesives of the chemical-reaction type adhesives include an adhesive that is cured by the reaction between a base compound and a curing agent, an adhesive that is cured by the reaction between a base compound and the moisture on the surface of the adherend, an adhesive that is cured by blocking of air, an adhesive that is cured by irradiation with ultraviolet rays, and the like. The hot-melt type adhesives are adhesives that are solid at normal temperature, which become liquid by heating and then are cured by cooling. The pressure-sensitive type adhesives are adhesives that retain the strength to the adherend due to the pressure-sensitive adhesiveness of the adhesive.

Since the dry-solidification type adhesives and the chemical-reaction type adhesives are liquid, they could not be touched by humans during handling. The hot-melt type adhesives can be touched by humans during handling, but require a heat source since heating is required during bonding, and further heat resistance was required for the adherend. The pressure-sensitive type adhesives can also be touched during handling, but the adhesiveness decreases once they are touched by humans, and a supporting substrate was required for use in a tape form.

Such adhesives that are excellent in handling, which differ from conventional adhesives, had been required. WO 2015/129903 A (Patent Document 1) discloses an adhesive that is excellent in handling and that has no adhesive force before stress is applied and exhibits an adhesive force after stress is applied.

### Prior Art Document

### Patent Document

Patent Document 1: WO 2015/129903 A

### Non-Patent Document

Non-Patent Document 1: "Textbook for Adhesion Technology for Would-be Professionals" edited by the Adhesion Society of Japan, Nikkan Kogyo Shimbun, Ltd., issued in June 2009

### Disclosure of the Invention

### Problems to be Solved by the Invention

An object of the present invention is to provide an adhesive that is further excellent in handling.

### Means for Solving the Problems

The present invention includes the following inventions.
[1] A granular adhesive comprising adhesive particles, wherein
   the adhesive particles comprise a core containing an adhesive composition, a shell covering the core, and an enclosed gas, and
   the shell comprises solid particles.
[2] The granular adhesive according to [1], wherein the core encloses the enclosed gas.
[3] The granular adhesive according to [1] or [2], wherein a volume fraction of the enclosed gas is 3% to 80% based on the total volume of the core.
[4] The granular adhesive according to any one of [1] to [3], wherein the solid particles comprise fine particles having a hydrophobic surface.
[5] The granular adhesive according to any one of [1] to [4], wherein the solid particles have a number average particle diameter of 500 µm or less.
[6] The granular adhesive according to [5], wherein the solid particles have a number average particle diameter of 10 nm or more and 500 µm or less.
[7] The granular adhesive according to any one of [1] to [6], wherein the solid particles have no adhesive force in an atmosphere at a temperature of 30°C.
[8] The granular adhesive according to any one of [1] to [7], wherein the adhesive particles have a maximum width of 100 µm or more and 50 mm or less.
[9] The granular adhesive according to any one of [1] to [8], wherein the core has a volume of 3 µL or more and 5 mL or less.
[10] The granular adhesive according to any one of [1] to [9], wherein the solid particles comprise fine particles of an inorganic substance.
[11] The granular adhesive according to any one of [1] to [10], wherein the solid particles comprise fine particles of an organic substance.
[12] The granular adhesive according to any one of [1] to [11], wherein the solid component concentration is 50 to 100% by mass.
[13] The granular adhesive according to any one of [1] to [12], wherein an adhesive force is exhibited by applying stress.
[14] The granular adhesive according to any one of [1] to [13], wherein the enclosed gas is ruptured to emit a sound by applying stress.
[15] A method for producing a film, which comprises the steps of:
   placing the granular adhesive according to any one of [1] to [14] on an adherend, and
   releasing the adhesive composition to the outside of the shell by applying stress to form a film containing the adhesive composition.
[16] The production method according to [15], further comprising the step of curing the film.

### Effects of the Invention

A granular adhesive of the present invention exhibits an adhesive force by applying predetermined stress or stress exceeding the predetermined stress, and further the enclosed gas is ruptured to emit a sound, thereby enabling the perception that the predetermined stress was applied, resulting in superiority in handling.

### Brief Description of the Drawings

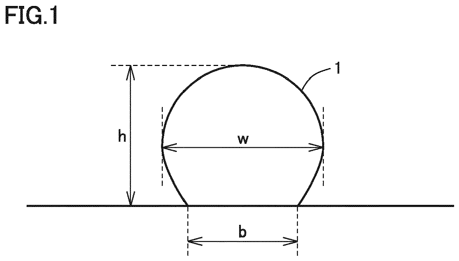

FIG. 1 is a schematic diagram of an adhesive particle constituting a granular adhesive of the present invention.

### Mode for Carrying Out the Invention

### [Granular Adhesive]

A granular adhesive of the present invention (hereinafter sometimes referred to as "the present adhesive") comprises adhesive particles, wherein the adhesive particles comprise a core containing an adhesive composition, a shell covering the core, and an enclosed gas, and the shell comprises solid particles. The number of adhesive particles comprised in the present adhesive may be one or plural.

### [1] Adhesive Particles

Each adhesive particle constituting the present adhesive is usually spherical or flat spherical in the air. However, when the particle diameter is relatively small, the adhesive particle can be non-spherical. Since the adhesive particles have solid particles of the shell having no adhesive force on the outer surface of the core, they have no adhesive force in a state where predetermined stress is not applied, and exhibit an adhesive force only when the adhesive composition contained in the core is released outside the shell by applying predetermined stress to disrupt the shell. When the shell is disrupted, predetermined stress or stress exceeding the predetermined stress is also applied to the adhesive composition, and thus the enclosed gas is ruptured to emit a sound. In the present adhesive, the sound emitted when the enclosed gas is ruptured enables perception that predetermined stress necessary for the exhibition of an adhesive force was applied, and that further application of stress is unnecessary. Therefore, the present adhesive is excellent in handling.

As used herein, the outer surface of the core means the outermost surface of the core, i.e., the critical surface to the air, and is sometimes referred to as simply "surface" in the present description.

FIG. 1 is a schematic diagram of a state where an adhesive particle constituting the present adhesive is placed on a table. In the schematic diagram, w represents a maximum width of an adhesive particle 1, b represents a contact width, and h represents a height. The maximum width w of the adhesive particle 1 is preferably 100 µm or more and 50 mm or less. It is more preferably 500 µm or more, and still more preferably 1 mm or more. It is more preferably 30 mm or less, still more preferably 20 mm or less, and particularly preferably 10 mm or less. It means that the smaller the contact width b is, and the smaller the difference between the maximum width w and the height h is, the more spherical the adhesive particle 1 after placed on an adherend is. These values can be controlled by adjusting the type, form, and size of a solid particle constituting the shell; the viscosity of the core; the contact angle of a substance forming the core to a solid particle constituting the shell; and the average thickness of the shell, and the like. The contact width b and the height h may be appropriately adjusted. Since the larger the contact width b is, the larger the frictional force occurring between the adhesive particle and the adhesion surface is, and the movement of the adhesive particle on the adhesion surface can be inhibited, it is preferable to adjust the contact width b according to the expected material and inclination, etc., of the adhesion surface. The contact width b can be adjusted to, for example, 1 to 100% of the maximum width w. The maximum width w, the contact width b, and the height h are values measured with calipers through microscopic observation.

The volume of the adhesive particle 1 is preferably 4 µL or more and 6 mL or less. It is more preferably 6 µL or more, and still more preferably 60 µL or more. It is more preferably 4 mL or less, and still more preferably 3 mL or less.

As mentioned above, the adhesive particles can release the adhesive composition contained in the core outside the shell by applying predetermined stress to disrupt the shell. The magnitude of the predetermined stress is appropriately selected according to application of the present adhesive and its general handling. The magnitude of the predetermined stress can be controlled by adjusting the type, form, and size of a solid particle constituting the shell; the viscosity of the core; the contact angle of a substance forming the core to a solid particle constituting the shell; and the average thickness of the shell, and the like.

The magnitude of the predetermined stress is preferably such that it is applied by crushing with human fingers. Specifically, it is preferably 1 to 1,000 kN/m², more preferably 5 to 200 kN/m², and still more preferably 5 to 100 kN/m². As long as the magnitude is in the above range, the adhesive composition can be easily released outside the shell by applying stress after the granular adhesive is placed on the adherend. Also, the handleability of the granular adhesive becomes satisfactory. If the predetermined stress is too small, the adhesive composition might be released outside the shell unintentionally. Therefore, the adhesive particles are preferably such that stress of less than 1 kN/m² does not cause disruption of the shell. When stress is applied to the adhesive particles, addition of a twist makes it easier for the adhesive composition to be released outside the shell.

As mentioned above, in the adhesive particles, the enclosed gas is ruptured to emit a sound when predetermined stress or stress exceeding the predetermined stress is applied to the adhesive composition. The magnitude of a sound emitted by rupture of the enclosed gas can be controlled by adjusting the number of enclosed gases, the volume of each enclosed gas, enclosed pressure, and the like. The magnitude of a sound emitted when predetermined stress is applied to one adhesive particle to disrupt the shell and to rupture the enclosed gas is preferably 35 dB or more, and more preferably 40 dB or more, as measured at a position 1.5 cm away from the adhesive particle in an environment of a quiet room (32 to 33 dB). As long as the magnitude is in the above range, users who are applying stress can fully percept and can use the sound as a guide for completing the work of adding stress.

### [2] Core

In the granular adhesive of the present invention, the core contains an adhesive composition. Examples thereof include a core as an adhesive composition itself, a core as a droplet containing an adhesive composition as mentioned below, a core in which part of water or a solvent contained in the droplet is removed, and the like. Examples of the adhesive composition include dry-solidification type adhesives, chemical-reaction type adhesives, or pressure-sensitive type adhesives. The adhesive composition may be an adhesive itself.

The dry-solidification type adhesives are classified into solvent-based adhesives, aqueous adhesives, and emulsion-based adhesives. The solvent-based adhesives are a type of adhesives that solidify by dissolving a polymer in an organic solvent and evaporating the organic solvent. Examples of the polymer include chloroprene-based rubbers, styrene-butadiene-based rubbers, nitrile-based rubbers, natural rubbers, vinyl chloride-based resins, vinyl acetate-based resins, acrylic resins, a urethane-based resins, and the like.

Examples of the organic solvent include toluene, n-hexane, ethyl acetate, methyl ethyl ketone, acetone, methanol, tetrahydrofuran, xylene, cyclohexanone, and the like.

The aqueous adhesives are a type of adhesives that solidify by dissolving a water-soluble polymer in water and evaporating the water. Examples of the water-soluble polymer include natural polymers such as starch and glue, dextrin, polyvinyl alcohol-based resins, and polyvinylpyrrolidone-based resins. Water may be pure water or may contain impurities to such an extent that they are contained in tap water.

The emulsion-based adhesives are a type of adhesives that solidify by evaporating a dispersion medium, in which polymer particles that were stabilized by the electrostatic stabilization effect or the steric stabilization effect are dispersed. Examples of the polymer constituting the polymer particles include vinyl acetate-based resins, (meth)acrylic resins, vinylidene chloride-based resins, epoxy-based resins, urethane-based resins, olefin-based resins, polyester-based resins, natural rubber-based resins, styrene-butadiene-based resins, chloroprene rubber-based resins, and the like. Examples of the dispersion medium include water and an organic solvent, and examples of the organic solvent are the same as mentioned above.

The chemical-reaction type adhesives are adhesives that solidify by the chemical reaction of one or more types of adhesive components by external stimuli such as heat or light. Examples of the chemical-reaction type adhesives include epoxy-based adhesives containing an epoxy resin and a curing agent, polyurethane-based adhesives containing polyisocyanate and polyol, urea resin-based adhesives containing urea and formaldehyde, melamine resin-based adhesives containing melamine and formaldehyde, and phenol resin-based adhesives containing phenol and formaldehyde.

Examples of the chemical-reaction type adhesives also include light-curable type epoxy-based adhesives, acrylic resin adhesives, anaerobic type acrylic adhesives, two-part curable type acrylic adhesives called second generation of acrylic adhesives (SGAs), and cyanoacrylate-based moisture-curable type adhesives, and the like. The two-part curable type adhesives are adhesives that are cured by the contact between the base compound and the curing agent, and are constituted such that the base compound and the curing agent are contained in different adhesive particles. The chemical-reaction type adhesives may contain water or a solvent together with these adhesives, and these adhesives may be dissolved or dispersed in water or an organic solvent.

Examples of the organic solvent are the same as mentioned above.

The pressure-sensitive type adhesives are adhesives that exhibit an adhesive force due to the pressure-sensitive adhesiveness of the adhesive, and the pressure-sensitive type adhesives usually include polymers such as a (meth)acrylic resin, a rubber-based resin, or a silicone-based resin. The pressure-sensitive type adhesives may contain water or an organic solvent together with these adhesives, and these adhesives may be dissolved or dispersed in water or an organic solvent. Examples of the organic solvent are the same as mentioned above.

The adhesive composition may contain other components. Examples of the other components include metal fine particles, metal-oxide fine particles, conductive fine particles, ionic conductive compositions, ionic compounds having organic cations or anions, silane coupling agents, crosslinking catalysts, weathering stabilizers, tackifiers, plasticizers, softeners, dyes, pigments, flavors, inorganic fillers, resins other than the above polymers, and light-diffusible fine particles such as organic beads, and the like.

The volume of the core containing the adhesive composition is preferably 3 µL or more and 5 mL or less. It is more preferably 30 µL or more, and still more preferably 50 µL or more. It is more preferably 3 mL or less, and still more preferably 2 mL or less.

### [3] Shell

The shell in the present invention is formed from solid particles and covers the core. It is preferably formed from an aggregate of solid particles. The shell preferably covers the core without a gap of 500 µm or more, more preferably covers the core without a gap of 100 µm or more, and still more preferably covers the core without a gap of 5 µm or more. The content of solid particles in the shell is preferably 90% by mass or more, more preferably 95% by mass or more, and still more preferably 100% by mass.

It is more preferable that the solid particles forming the shell in the present adhesive have a number average particle diameter of 500 µm or less. The number average particle diameter is preferably 10 nm or more and 500 µm or less, more preferably 10 nm or more and 800 nm or less, and still more preferably 20 nm or more and 500 nm or less. It is preferable that the number average particle diameter of the fine particles is in the above range since the stability of the granular adhesive in the air becomes higher.

The number average particle diameter is calculated from the equivalent circle diameter by microscopy, and can be measured by analyzing an image obtained by microscopic observation using digital microscope software, etc. Examples of the digital microscope software include, for example, product name "Motic Images Plus 2.2s" manufactured by SHIMADZU RIKA CORPORATION. Examples of the microscope include an electron microscope or light microscope, or the like, and an appropriate microscope may be selected according to the solid particles to be used. The magnification in the observation may be appropriately selected according to the particle diameter of the solid particles to be used. The number average particle diameter of the solid particles should be the number average particle diameter of randomly selected 100 solid particles.

The contact angle of the substance forming the core on the aggregated solid particles is usually 90° or more, preferably 100° or more, more preferably 110° or more, and still more preferably 120° or more. The contact angle is usually 170° or less, and may be 160° or less. It is preferable to have such contact angle since the adsorption between the solid particle forming the shell and the substance forming the core becomes easy and the morphological stability of the adhesive particles becomes higher. If the contact angle is less than 90°, the substance forming the core permeates into plural solid particles, which are shell materials, and thus it might be difficult to form the adhesive particles. The solid particles preferably contain fine particles having a hydrophobic surface. Depending on the type of the substance forming the core, the above-mentioned contact angle can be 90° or more by using fine particles having a hydrophobic surface.

The solid particles are preferably fine particles having no adhesive force in an atmosphere at a temperature of 30°C. The solid particles are fine particles having no adhesive force in an atmosphere more preferably at a temperature of 40°C or lower, still more preferably at a temperature of 50°C or lower, and yet more preferably at a temperature of 80°C or lower. As used herein, "having no adhesive force" means an adhesive force with a tack of 0.02 MPa or less as measured by a probe tack test under the following conditions using a commercial apparatus. "Tack" means the maximum stress as measured by a probe tack test under the following conditions. Examples of the commercial apparatus include a probe tack tester with a thermostat (product name "TE-6002") manufactured by TESTER SANGYO CO., LTD.

### <Measurement Conditions>

Probe tack tester: probe tack tester with a thermostat,

Rate at which the pressure-sensitive adhesive is brought into contact with the probe: 10 mm/second,

Contact time: 30 seconds,
Release rate: 10 mm/second.

The glass transition temperature (Tg) of the solid particles is preferably 40°C or higher, more preferably 50°C or higher, and still more preferably 80°C or higher. It is not preferable that Tg is lower than the above-mentioned value since the shell exhibits an adhesive force due to change in the external environment, leading to poor handling. The softening temperature of the fine particles is preferably 40°C or higher, more preferably 50°C or higher, and still more preferably 80°C or higher. When the softening temperature is lower than the above-mentioned value, the shell exhibits an adhesive force due to change in the external environment, leading to poor handling.

The decomposition temperature of the solid particles is preferably 40°C or higher, more preferably 50°C or higher, and still more preferably 80°C or higher. When the decomposition temperature is lower than the above-mentioned value, the present adhesive exhibits an adhesive force due to change in the external environment, leading to poor handling.

As the solid particles, fine particles such as fine particles of inorganic substances and fine particles of organic substances can be preferably used. The solid particles may be a combination of two or more fine particles.

Examples of the fine particles of inorganic substances include talc, clay, kaolin, silica, hydrotalcite, diatomaceous earth, magnesium carbonate, barium carbonate, calcium sulfate, calcium carbonate, magnesium sulfate, barium sulfate, barium titanate, aluminum hydroxide, magnesium hydroxide, calcium oxide, magnesium oxide, titanium oxide, zinc oxide, silicon oxide, alumina, mica, zeolite, glass, zirconia, calcium phosphate, metals (gold, silver, copper, and iron), carbon materials (carbon nanotube, fullerene, graphene, and graphite), and the like. The surface of these fine particles may be surface-modified by surface-modifying agents such as silane coupling agents, and surfactants.

Examples of the fine particles of organic substances include fine particles of resins, and fine particles derived from natural products, and the like. Examples of the components of the fine particles of resins include homopolymers such as styrene, vinyl ketone, acrylonitrile, methyl methacrylate, ethyl methacrylate, glycidyl methacrylate, glycidyl acrylate, and (meth) methyl acrylate, or copolymers in which two or more types of monomers are polymerized; fluorine-based resins such as polytetrafluoroethylene, tetrafluoroethylene-hexafluoropropylene copolymers, tetrafluoroethylene-ethylene copolymers, and polyvinylidene fluoride; melamine resins; urea resins; polyethylene; polypropylene; polydimethylsiloxane-based polymers; polyester; and polyamide. The surface of these fine particles may be surface-modified by surface-modifying agents such as silane coupling agents, and surfactants.

As mentioned above, the solid particles may be a combination of two or more types of fine particles. Examples of the combination include a combination of two or more types of fine particles with different materials, and a combination of two or more types of fine particles with the same material and different particle size distributions, and the like.

Tg of the above-mentioned resins can be adjusted according to the polymerization conditions such as monomer ratio. Examples of the above-mentioned fine particles derived from natural products include spores or pollens of plants, or fine particles derived from natural waxes, or the like. The surface of these fine particles may be surface-modified by surface-modifying agents such as silane coupling agents, and surfactants.

The fine particles are preferably fine particles having a hydrophobic surface. When the surface is hydrophobic, the whole surface of a droplet as mentioned below is tended to be covered, and the granular adhesive can be easily prepared. For fine particles having a hydrophilic surface, the surface of the fine particles can be made hydrophobic by hydrophobization treatment on the surface.

As the fine particles, among the above-mentioned fine particles, silica, Lycopodium, polytetrafluoroethylene, calcium carbonate particles after hydrophobization treatment are preferable.

Such fine particles are commercially available. Examples of the commercially available products include silica particles ("RX-300" and "RY-300", manufactured by NIPPON AEROSIL CO., LTD.), calcium carbonate particles (manufactured by SHIRAISHI KOGYO KAISHA, LTD., after hydrophobization treatment), polytetrafluoroethylene (manufactured by Sigma-Aldrich Japan), silicone particles ("Tospearl 2000B", "Tospearl 1110A", "Tospearl 145A", and "Tospearl 150KA", manufactured by Momentive), and the like.

The thickness of the shell can be calculated from the number average particle diameter of the solid particles, but it is preferable to calculate the average thickness since part of the shell may be a monolayer or multilayer of the solid particles and dispersion is observed. The average thickness of the shell is preferably 2 mm or less, more preferably 10 nm or more and 500 µm or less, and still more preferably 100 nm or more and 500 µm or less. It is preferable that the average thickness is in the above range since the morphological stability of the adhesive particles is high and the shell can be disrupted by applying appropriate stress. "Shell is disrupted" means that the adhesive composition contained in the core is released outside the shell by the stress applied to the adhesive particles. The average thickness of the shell is calculated as follows: The adhesive particle is broken at a temperature below the glass transition point of the adhesive composition forming the core; its cross section is observed with an electron microscope (a transmission electron microscope or a scanning electron microscope); the thickness of the shell is measured at 10 points; and the number average of the measurement values is calculated and used as the average thickness of the shell. When the adhesive particles are too large, measurement can be performed by preparing an ultrathin section.

### [4] Enclosed Gas

Examples of the enclosed gas include oxygen, carbon dioxide, nitrogen, helium, or a combination thereof. The enclosed gas may be air in which the composition is not particularly adjusted. The enclosed gas may contain water vapor.

The enclosed gas is preferably contained in the core, and in this case, the substance forming the core is adjusted so that the gas is retained in the core. The number of enclosed gases in the adhesive particle may be one or plural. The volume fraction of the enclosed gas in each adhesive particle is, for example, 3% to 80%, preferably 10% to 70%, and more preferably 15 to 60%, based on the total volume of the core.

### [5] Method for Producing Granular Adhesive

The present adhesive can be produced by the following steps (1) to (3) and the step of enclosing a gas:
(1) the step of bringing a droplet containing an adhesive composition into contact with solid particles,
(2) the step of covering the whole surface of the droplet containing an adhesive composition with the solid particles, and
(3) the optional step of drying the droplet containing an adhesive composition whose whole surface is covered with the solid particles.

The method for enclosing a gas is not particularly limited, and examples thereof include a method for enclosing a gas by getting air caught when the droplet containing an adhesive composition is adjusted before the step (1), a method for enclosing a gas concurrently with the step (1), a method for enclosing a gas by injecting the gas into the droplet after the step (1), a method for enclosing a gas by getting air caught during the step (2), and a method for enclosing a gas by containing water vapor inside during the step (3), and the like.

For the droplet containing an adhesive composition, the adhesive composition may be used as it is, the adhesive composition dissolved in water or a solvent may be used, the adhesive composition dispersed in water or a solvent may be used, or the adhesive composition diluted with water or a solvent may be used. For a droplet of an adhesive composition containing a pressure-sensitive type adhesive, usually the pressure-sensitive type adhesive dissolved or dispersed in water or a solvent is used. Examples of the solvent include an organic solvent, and examples thereof are the same as mentioned above.

The solid component concentration of the droplet containing an adhesive composition when brought into contact with solid particles is usually 5 to 100% by mass, preferably 10 to 80% by mass, more preferably 20 to 70% by mass, and still more preferably 40 to 60% by mass. It is preferable that the solid component concentration is in the above range since the present adhesive is easily produced. "Solid component concentration" as used herein means a concentration of components other than a solvent and water that are contained in the droplet containing an adhesive composition.

The size of the droplet containing an adhesive composition (volume of the core) is preferably 3 µL or more and 5 mL or less. It is more preferably 30 µL or more, and still more preferably 50 µL or more. It is more preferably 3 mL or less, and still more preferably 2 mL or less. By adjusting the size of the droplet, the number average particle diameter of the adhesive particles can be adjusted.

As a method for bringing the droplet containing an adhesive composition into contact with solid particles, the droplet containing an adhesive composition may be sprayed on an aggregate of the solid particles using a sprayer, etc., or may be dropped thereon.

The whole surface of the droplet containing an adhesive composition may be covered with solid particles, and usually is covered with solid particles by rolling the droplet containing an adhesive composition on solid particles. The periphery of the droplet may be covered with solid particles by mixing the droplet with the solid particles using a mixer, etc., to bring them into contact with each other.

The droplet containing an adhesive composition whose whole surface is covered with solid particles may be dried. When the droplet containing an adhesive composition contains a solvent or water, it is preferable to dry the droplet. Drying may be performed before stress is applied or may be performed after stress is applied. "Drying" as used herein means that water or a solvent is removed from the above-mentioned droplet containing an adhesive composition covered with solid particles. Water or a solvent may be completely removed, or may be remained as long as the adhesiveness of the adhesive is not decreased. Examples of the drying method include a method for standing at a temperature at which the chemical and physical properties of the adhesive composition and the solid particles are not changed; a method for exposing to warm air, hot air, or low-humidity air; a method for vacuum drying; a method for freeze-drying; a method for irradiating with infrared rays, far-infrared rays, or electron beams, or the like, and the like. Drying temperature is preferably 10 to 200°C, and more preferably 20 to 100°C.

The solid component concentration of the adhesive composition contained in the present adhesive after drying is, for example, 10 to 100% by mass, preferably 50 to 100% by mass, more preferably 80 to 100% by mass, and still more preferably 90 to 100% by mass. In order to adjust the attached amount of solid particles after drying, the adhesive particles may be sieved or washed with water, etc.

### [6] Application of Granular Adhesive

The present adhesive can be used for adhesives for automobiles, adhesives for building materials, fit of bearings, fixation of piping, locking of screws, fixation of gears and propellers, assembly of furniture, fall-preventing members (earthquake countermeasures), temporal tacking materials for exhibits, temporal tacking materials for clothes, stationary, and the like.

The adhesive of the present invention can be used by being sandwiched between adherends. For example, the present adhesive is sandwiched between one adherend (hereinafter referred to as adherend A) and another adherend (hereinafter referred to as adherend B) and these adherends are pressed each other to apply stress to the present adhesive, thereby enabling the adherend A and the adherend B to be bonded each other. The adherend A and the adherend B may be the same or different.

For example, the present adhesive is sandwiched between the adherend A and a release material, and the adherend A and the release material are pressed each other to apply stress to the present adhesive, thereby enabling the adhesive composition to be released on the surface of the adherend A. Thereafter, the release material can be removed. After the release agent is removed, the adherend B may be bonded.

Also, the present adhesive is developed into a plane, and stress is applied to the present adhesive, thereby enabling the adhesive composition to be released outside the shell to form a film containing the adhesive composition. The present adhesive is usually placed on a plane adherend. Stress is usually applied via a release material, and the release material is then removed.

The adherend B may be further bonded on the film.

A coating film can be formed by curing the film. For example, the surface of the adherend can be coated with a cured material of the adhesive composition.

### Examples

The present invention will be described by way of Examples. Percentages and parts in Examples are by mass unless otherwise specified.

### (Example 1)

### <Preparation of Adhesive Composition>

A mixed solution of 0.6 g of ammonium peroxide and 5 mL of ion exchanged water was added to a mixed solution of 195 mL of ion exchanged water, 60 g of purified butyl acrylate (BA), and 0.6 g of acrylic acid. Then, the solution was stirred at 65°C for 24 hours (stirring rate: 250 rpm) to perform polymerization reaction. The mixture thus obtained was purified by being put in a dialysis membrane (cutoff molecular weight: 100,000) and being dialyzed to obtain a polybutyl acrylate emulsion (1). The solid component concentration of the polybutyl acrylate emulsion (1) thus obtained was 49.4% by mass, and the volume average particle diameter (Dv) of the dispersoid measured using a laser diffraction particle size analyzer (product name "Mastersizer 2000", manufactured by Malvern) was 540 ± 200 nm. The solid component concentration was measured by the gravimetric method.

### <Preparation of Adhesive Particles>

Calcium carbonate particles with a number average particle diameter of 120 nm (after hydrophobization treatment, manufactured by SHIRAISHI KOGYO KAISHA, LTD.) were spread in a thin layer on a dish. The calcium carbonate particles had no adhesive force at a temperature of 80°C or lower. On the calcium carbonate particles, 15 µL of the polybutyl acrylate emulsion (1) (solid component concentration was 49.4% by mass) was dropped. After dropping, air was injected by inserting the tip of a pipetter inside the polybutyl acrylate emulsion. The polybutyl acrylate emulsion (1) containing air dropped was rolled on the calcium carbonate particles for 30 seconds to obtain adhesive particles (1) in which the outer whole surface of the droplet of the polybutyl acrylate emulsion was covered with the calcium carbonate particles. Water was removed by drying the adhesive particles (1) at room temperature for 24 hours to obtain flat and spherical adhesive particles (2) in which the outer whole surface of the grains of polybutyl acrylate was covered with the calcium carbonate particles.

### <Measurement of Size of Adhesive Particles>

The size of 10 adhesive particles (1) (before drying) and adhesive particles (2) (after drying) was measured with calipers, thus obtaining the following results.

### [1] Size of Adhesive Particle (1) (Before Drying)

Maximum width (w): 4.0 to 4.9 mm (4.5 ± 0.3 mm on average),
Contact width (b): 3.1 to 3.9 mm (3.5 ± 0.3 mm on average),
Height (h): 3.2 to 4.0 mm (3.7 ± 0.2 mm on average).

### [2] Size of Adhesive Particle (2) (After Drying)

Maximum width (w): 3.4 to 4.2 mm (3.9 ± 0.3 mm on average),
Contact width (b): 2.5 to 3.1 mm (2.9 ± 9.2 mm on average),
Height (h): 2.9 to 3.6 mm (3.3 ± 0.3 mm on average).

### <Measurement of Volume Fraction of Enclosed Gas>

By adding one adhesive particle (2) to a nitric acid solution in which pH was adjusted to 2, followed by stirring, calcium carbonate was removed. An APS-P (BA-AA) pressure-sensitive adhesive particle dried body after calcium carbonate was removed was observed with a light microscope (Motic BA200, SHIMADZU RIKA CORPORATION) and a stereoscopic microscope (TG300PC microscope (3 million pixels)) equipped with a digital camera (Moticam 2000, manufactured by SHIMADZU RIKA CORPORATION). From the photographs taken, for 5 adhesive particles (2), the volume fraction of the enclosed gas was calculated based on the total volume of the core. As a result, the minimum value was 48.6%, the maximum value was 76.8%, and the average was 58.2%.

### <Evaluation of Adhesiveness of Adhesive Particles>

Adhesive particles (2) were sandwiched by two release papers (laminate release papers, manufactured by LINTEC Corporation) from top and bottom. Further, the adhesive particles (2) sandwiched by two release papers were sandwiched by two slide glasses (MICRO SLIDE GLASS S7213, size: 76 × 26 mm, thickness: 0.9 to 0.12 mm, Pre-Cleaned: 100 Pcs, Matsunami Glass Ind., Ltd.), and they were kneaded by being reciprocated vertically and horizontally 30 times, thereby applying stress to the adhesive particles (2). The adhesive force of the adhesive particles (2) thus obtained was evaluated in an atmosphere at a temperature of 30°C using a probe tack tester (product name "TE-6002", TESTER SANGYO CO., LTD.) by the following methods. The granular adhesive (2) was placed on the tip of a probe. A bobbin-like weight (200 g: 10 g of bobbin + 190 g of weight) to which a cover glass was fixed was placed such that the cover glass faced the adhesive particle (2). By lowering the bobbin-like weight to which the cover glass was fixed at a constant rate (10 mm/second), the probe on which the adhesive particle (2) was placed pushed up the cover glass, and the adhesive particle (2) was brought into contact with the tip of the cover glass at a constant load (200 g) (contact time: 30 seconds). Thereafter, by elevating the bobbin-like weight to which the cover glass was fixed at a constant rate (10 mm/second), the adhesive particle (2) was separated from the cover glass. From a stress-displacement curve measured at this time, tack was calculated from the maximum stress, and release energy was calculated from the area of the curve. As a result, for 5 adhesive particles (2), the average of tack was 0.115 MPa, and the average of release energy was 157 J/m².

The same evaluation was performed for adhesive particles (2) to which predetermined stress was not applied (in which the shell was not disrupted). As a result, for 5 adhesive particles (2), the average of tack was 0.0090 MPa, and the average of release energy was 2.75 J/m².

### <Measurement of Sound Volume of Adhesive Particles>

The magnitude of a sound emitted when stress was applied to the granular adhesive (2) to rupture the enclosed gas was measured with a digital noise level meter (digital noise level meter, 3223-165-120, manufactured by SHIRAIMATSU & Co., Ltd.). The distance between the granular adhesive (2) and the microphone was 1.5 cm, and measurement was performed in a quiet room (32 to 33 dB). As a result of measurement of 5 adhesive particles (2), the minimum value was 43.9 dB, the maximum value was 49.2 dB, and the average was 46.4 dB.

### (Example 2)

### <Preparation of Adhesive Particles>

Under the same conditions as for obtaining the adhesive particles (2) of Example 1, except that 180 µL of the polybutyl acrylate emulsion (1) was dropped on the calcium carbonate particles and used, flat and spherical adhesive particles (3) were obtained.

### <Measurement of Size of Adhesive Particles>

The size of 10 adhesive particles (3) (before drying and after drying) was measured in the same manner as in the adhesive particles (2).

### [1] Size of Adhesive Particle (3) (Before Drying)

Maximum width (w): 8.2 to 9.8 mm (9.1 ± 0.4 mm on average),
Contact width (b): 7.0 to 8.2 mm (7.9 ± 0.3 mm on average),
Height (h): 5.5 to 7.0 mm (6.3 ± 0.5 mm on average).

### [2] Size of Adhesive Particle (3) (After Drying)

Maximum width (w): 7.8 to 8.4 mm (8.1 ± 0.2 mm on average),
Contact width (b): 6.2 to 7.2 mm (6.9 ± 0.3 mm on average),
Height (h): 5.8 to 6.2 mm (6.1 ± 0.1 mm on average).

### <Measurement of Volume Fraction of Enclosed Gas>

For 5 adhesive particles (3), when the volume fraction of the enclosed gas was calculated in the same manner as in the adhesive particles (2), the minimum value was 8.5%, the maximum value was 41.3%, and the average was 18.5%.

### <Evaluation of Adhesiveness of Adhesive Particles>

Adhesive particles (3) to which predetermined stress was applied to disrupt the shell had an adhesive force in an atmosphere at a temperature of 30°C. Meanwhile, adhesive particles (3) to which predetermined stress was not applied (in which the shell was not disrupted) had no adhesive force in an atmosphere at a temperature of 30°C.

### <Measurement of Sound Volume of Adhesive Particles>

For 5 adhesive particles (3), when the magnitude of a sound emitted when stress was applied to rapture the enclosed gas was measured in the same manner as in the adhesive particles (2), the minimum value was 42.9 dB, the maximum value was 45.9 dB, and the average was 43.9 dB.

### (Comparative Example 1)

### <Preparation of Adhesive Particles>

Under the same conditions as for obtaining the adhesive particles (2) of Example 1, except that 15 µL of the polybutyl acrylate emulsion (1) was dropped on the calcium carbonate particles and air was not injected by inserting the tip of a pipetter inside the polybutyl acrylate emulsion, flat and spherical adhesive particles (4) were obtained.

### <Measurement of Size of Adhesive Particles>

The size of 10 adhesive particles (4) (before drying and after drying) was measured in the same manner as in the adhesive particles (2).

### [1] Size of Adhesive Particle (4) (Before Drying)

Maximum width (w): 2.8 to 3.5 mm (3.2 ± 0.2 mm on average),
Contact width (b): 2.7 to 3.1 mm (2.9 ± 0.1 mm on average),
Height (h): 2.3 to 3.0 mm (2.7 ± 0.2 mm on average).

### [2] Size of Adhesive Particle (4) (After Drying)

Maximum width (w): 2.6 to 2.9 mm (2.8 ± 0.1 mm on average),
Contact width (b): 1.9 to 2.1 mm (2.0 ± 0.1 mm on average),
Height (h): 2.1 to 2.7 mm (2.4 ± 0.2 mm on average).

### <Evaluation of Adhesiveness of Adhesive Particles>

For 5 adhesive particles (4), when the adhesiveness was evaluated by applying predetermined stress to disrupt the shell in the same manner as in the adhesive particles (2), the average of tack was 0.0885 N, and the average of release energy was 112 J/m². Even when predetermined stress was applied, no sound of rupture of the enclosed gas was emitted.

The same evaluation was performed for adhesive particles (4) to which predetermined stress was not applied (in which the shell was not disrupted). As a result, for 5 adhesive particles (4), the average of tack was 0.00477 MPa, and all values of release energy were almost 0 J/m².

### (Comparative Example 2)

### <Preparation of Adhesive Particles>

Under the same conditions as for obtaining the adhesive particles (2) of Example 1, except that 180 µL of the polybutyl acrylate emulsion (1) was dropped on the calcium carbonate particles and air was not injected by inserting the tip of a pipetter inside the polybutyl acrylate emulsion, flat and spherical adhesive particles (5) were obtained.

### <Measurement of Adhesive Particles>

The size of 10 adhesive particles (5) (before drying and after drying) was measured in the same manner as in the adhesive particles (2).

### [1] Size of Adhesive Particle (5) (Before Drying)

Maximum width (w): 8.3 to 9.2 mm (9.0 ± 0.3 mm on average),
Contact width (b): 7.3 to 8.3 mm (7.9 ± 0.3 mm on average),
Height (h): 4.0 to 4.9 mm (4.6 ± 0.2 mm on average).

### [2] Size of Adhesive Particle (5) (After Drying)

Maximum width (w): 6.9 to 8.0 mm (7.8 ± 0.3 mm on average),
Contact width (b): 5.7 to 6.8 mm (6.4 ± 0.3 mm on average),
Height (h): 3.8 to 4.2 mm (4.0 ± 0.1 mm on average).

### <Evaluation of Adhesiveness of Adhesive Particles>

Adhesive particles (3) to which predetermined stress was applied to disrupt the shell had an adhesive force in an atmosphere at a temperature of 30°C. Even when predetermined stress was applied, no sound of rupture of the enclosed gas was emitted. Meanwhile, adhesive particles (3) to which predetermined stress was not applied (in which the shell was not disrupted) had no adhesive force in an atmosphere at a temperature of 30°C.

As is apparent from these results, the present adhesive before stress is applied has no adhesive force, and that an adhesive in which an adhesive force is exhibited and a sound is emitted when predetermined stress is applied can be obtained. Since a user can percept that an adhesive force was exhibited based on the emitting of a sound, the present adhesive is an adhesive that is excellent in handling. The adhesive force can be controlled in a wide range.

### Industrial Applicability

The granular adhesive of the present invention is useful since it is easier to handle and is excellent in handling compared with conventional adhesives.

### Description of Reference Numerals

1: Adhesive particle

## Claims

1. A granular adhesive comprising adhesive particles, wherein
the adhesive particles comprise a core containing an adhesive composition, a shell covering the core, and an enclosed gas, and
the shell comprises solid particles.

2. The granular adhesive according to claim 1, wherein the core encloses the enclosed gas.

3. The granular adhesive according to claim 1 or 2, wherein a volume fraction of the enclosed gas is 3% to 80% based on the total volume of the core.

4. The granular adhesive according to any one of claims 1 to 3, wherein the solid particles comprise fine particles having a hydrophobic surface.

5. The granular adhesive according to any one of claims 1 to 4, wherein the solid particles have a number average particle diameter of 500 µm or less.

6. The granular adhesive according to claim 5, wherein the solid particles have a number average particle diameter of 10 nm or more and 500 µm or less.

7. The granular adhesive according to any one of claims 1 to 6, wherein the solid particles have no adhesive force in an atmosphere at a temperature of 30°C.

8. The granular adhesive according to any one of claims 1 to 7, wherein the adhesive particles have a maximum width of 100 µm or more and 50 mm or less.

9. The granular adhesive according to any one of claims 1 to 8, wherein the core has a volume of 3 µL or more and 5 mL or less.

10. The granular adhesive according to any one of claims 1 to 9, wherein the solid particles comprise fine particles of an inorganic substance.

11. The granular adhesive according to any one of claims 1 to 10, wherein the solid particles comprise fine particles of an organic substance.

12. The granular adhesive according to any one of claims 1 to 11, wherein the solid component concentration is 50 to 100% by mass.

13. The granular adhesive according to any one of claims 1 to 12, wherein an adhesive force is exhibited by applying stress.

14. The granular adhesive according to any one of claims 1 to 13, wherein the enclosed gas is ruptured to emit a sound by applying stress.

15. A method for producing a film, which comprises the steps of:
placing the granular adhesive according to any one of claims 1 to 14 on an adherend, and
releasing the adhesive composition to the outside of the shell by applying stress to form a film containing the adhesive composition.

16. The production method according to claim 15, further comprising the step of curing the film.
